# NEUE EUROPÄISCHE PATENTSCHRIFT

(11) **EP 1 504 230 B2**
(45) Veröffentlichungstag und Bekanntmachung des Hinweises auf die Entscheidung über den Einspruch: **13.11.2013**
(45) Hinweis auf die Patenterteilung: 31.12.2008
(21) Anmeldenummer: 03747413.7
(22) Anmeldetag: 22.04.2003
(51) Int. Cl.: F28F 1/02

(54) **WÄRMETAUSCHER, INSBESONDERE LADELUFTKÜHLER**
HEAT EXCHANGER, IN PARTICULAR CHARGE-AIR COOLER
ECHANGEUR THERMIQUE, NOTAMMENT REFROIDISSEUR D'AIR DE SURALIMENTATION

(30) Priorität: 03.05.2002 DE 10219867
(43) Veröffentlichungstag der Anmeldung: 09.02.2005
(73) Patentinhaber: Behr GmbH & Co. KG, 70469 Stuttgart (DE)
(72) Erfinder: Emrich, Karsten, 70190 Stuttgart (DE); Hendrix, Daniel, 70374 Stuttgart (DE); Reeb, Wolfgang, 72631 Aichtal (DE); Schairer, Andre, 70184 Stuttgart (DE)
(74) Vertreter: Grauel, Andreas
(86) Internationale Anmeldenummer: PCT/EP2003/004163
(87) Internationale Veröffentlichungsnummer: WO 2003/093751

(56) Entgegenhaltungen:
- EP-A- 0 773 420
- DE-A- 19 608 049
- DE-U- 29 705 214
- FR-A- 608 433
- FR-A- 608 433
- FR-A1- 2 777 645
- GB-A- 622 421
- JP-A- H11 351 777
- US-A- 2 258 041
- US-A- 3 077 661
- PATENT ABSTRACTS OF JAPAN vol. 1998, no. 05, 30. April 1998 (1998-04-30) -& JP 10 009791 A (SHOWA ALUM CORP), 16. Januar 1998 (1998-01-16)

## Beschreibung

Die vorliegende Erfindung betrifft einen Wärmetauscher, insbesondere einen Ladeluftkühler für ein Kraftfahrzeug.

Um eine Leistungssteigerung eines Verbrennungsmotors zu erzielen, kann die der Verbrennung zuzuführende Luft beispielsweise mit einem Turbolader verdichtet werden, bevor sie den Brennkammern des Verbrennungsmotors zugeführt wird. Die Verdichtung der Luft bringt jedoch gleichzeitig eine Erwärmung derselben mit sich, die für einen optimalen Ablauf des Verbrennungsprozesses nachteilig ist. Beispielsweise kann dadurch eine verfrühte Zündung oder eine erhöhte Stickoxidemission ausgelöst werden. Um die nachteiligen Folgen von der Verbrennung zugeführter überhitzter Luft zu vermeiden, wird einem Turbolader ein als Ladeluftkühler ausgebildeter Wärmetauscher nachgeschaltet, mit dem die komprimierte Luft vor ihrer Verbrennung auf eine zulässige Temperatur abgekühlt werden kann.

Ein Ladeluftkühler ist beispielsweise in der DE 197 57 034 A1 beschrieben. Bei dem dortigen Wärmetauscher wird die heiße Luft in einen ersten Sammelkanal des Wärmetauschers eingeleitet, wo sie sich verteilt und in Flachrohre einströmt, die in den Sammelkanal einmünden. Die Flachrohre sind nebeneinander, und mit den die langen Seiten ihres Querschnittes enthaltenden Seitenflächen parallel zueinander angeordnet und bilden einen Strömungsweg aus, durch den kühlende Luft durchgeleitet wird. Im Strömungsweg sind zwischen den Flachrohren Kühlrippen angeordnet, die einen effektiven Wärmeaustausch zwischen den Flachrohren und dem kühlenden Luftstrom bewirken. Nach dem Durchqueren des kühlenden Luftstromes münden die Flachrohre in einem zweiten Sammelkanal, der die darin einströmende gekühlte, komprimierte Ladeluft der Verbrennung im Motor zuführt.

Bei Wärmetauschern wie insbesondere derartigen Ladeluftkühlern sind die Rohre üblicherweise in Öffnungen eines Rohrbodens gesteckt und fluiddicht verlötet. Bei jeder Beladung mit komprimierter Luft unterliegt diese Lötverbindung aufgrund schneller Druckänderungen hohen mechanischen Belastungen. Besonders die Schmalseiten von Flachrohren erfüllen nicht die steigenden Festigkeitsanforderungen, wodurch sich Undichtigkeiten insbesondere an den Ecken solcher Rohr-Boden-Verbindungen ergeben können.

Ein einfacher Weg, um die Festigkeit von Rohr-Boden-Verbindungen zu steigern, ist eine Verwendung von Rohren mit höherer Wandstärke oder von Außen- und/oder Innenrippen mit höherer Materialstärke. Die vergrößerte mechanische Stabilität ist in beiden Fällen einleuchtend, der dafür benötigte Mehraufwand an Materialkosten und -gewicht jedoch sehr hoch.

Andere Lösungsvorschläge befassen sich mit einer Verminderung der mechanischen Beanspruchung der Rohr-Boden-Verbindungen, beispielsweise durch Verwendung von Zugankern in den Ladeluftkästen. Diese Zuganker stabilisieren die Ladeluftkästen und entlasten dadurch die Rohr-Boden-Verbindungen, bringen jedoch eine Erhöhung des durch den Ladeluftkühler verursachten Druckverlustes mit sich.

Ein Wärmetauscher gemäß Oberbegriff von Anspruch 1 ist bekannt aus FR 2 777 645.

Die Aufgabe der Erfindung ist es, einen Wärmetauscher bereitzustellen, bei dem eine hohe mechanische Festigkeit von Rohr-Boden-Verbindungen bei geringem Mehraufwand an Material und nicht oder wenig erhöhtem Druckverlust realisierbar ist.

Diese Aufgabe wird durch einen Wärmetauscher mit den Merkmalen des Anspruchs 1 gelöst.

Gemäß Anspruch 1 besteht ein erfindungsgemäßer Wärmetauscher aus zumindest einem Kasten mit zumindest einer Kammer zur Verteilung und/oder Sammlung eines strömenden Mediums und aus Rohren, die zumindest ein Rohrbündel bilden.

Ein Rohrbündel im Sinne der Erfindung wird durch nebeneinanderliegende Rohre gebildet. Die Rohre können dabei in einer Reihe oder in mehreren Reihen angeordnet sein.

Der zumindest eine Kasten weist einen Rohrboden mit Öffnungen auf, wobei die Rohre in die Öffnungen einsteckbar sind, um mit der zumindest einen Kammer kommunizierend verbunden zu werden. Erfindungsgemäß ist mindestens ein Rohr, das in eine Öffnung des Rohrbodens einsteckbar ist, zumindest in einem Bereich des Rohres, der in der Öffnung steckt, zumindest doppelwandig ausgebildet. Dadurch wird eine feste Lötverbindung zwischen dem Rohr und dem Rohrboden ermöglicht, die auch erhöhte mechanische Stabilitätsanforderungen erfüllt. Der Material- und damit der Kostenmehraufwand gegenüber einem einwandigen Rohr ist besonders gering, wenn sich der zumindest doppelwandige Bereich des Rohres auf einen Bereich der Rohrbodenöffnung beschränkt oder nur wenig über diesen Bereich hinausreicht. Hinsichtlich der Festigkeit ist eine solche Beschränkung möglich, da die Stabilitätsanforderungen an das Rohr außerhalb des Bereiches der Rohrbodenöffnung üblicherweise geringer sind, so daß dort eine einwandige Ausführung des Rohres ausreichend ist.

Eine Rohrwand im Sinne der Erfindung ist ein dreidimensionales Gebilde, das zu einem Innenraum eines Rohres durch eine Innenfläche oder Wandinnenfläche und zu einem Außenraum oder einer Umgebung des Rohres durch eine Außenfläche oder Wandaußenfläche abgegrenzt ist. Ein doppelwandig ausgebildetes Rohr besitzt demnach zwei solche Wände, nämlich eine innere und eine äußere Wand, wobei sich die Außenfläche der inneren Wand und die Innenfläche der äußeren Wand einander gegenüberstehen. In einem doppelwandigen Bereich kann eine innere oder eine äußere Wand Unterbrechungen aufweisen, d.h. sie muß nicht umlaufend geschlossen sein.

Um bei dem erfindungsgemäßen Wärmetauscher die stabilisierende Wirkung der zumindest doppelwandigen Ausführung eines Rohrbereiches weiter zu erhöhen, berühren sich die Außenfläche einer inneren Rohrwand und die Innenfläche einer äußeren Rohrwand. Besonders bevorzugt sind die innere und die äußere Rohrwand miteinander verlötet oder verschweißt.

Das zumindest doppel-wandige Rohr weist zumindest einen Verbindungssteg auf, der gegenüberliegende Bereiche einer inneren Wand miteinander verbindet. Ein solcher Verbindungssteg bewirkt eine weitere Versteifung des Rohres, was im zumindest doppelwandigen Bereich zu einer weiteren Erhöhung der Stabilität führt. Dadurch kann gegebenenfalls die Dicke einer inneren oder einer äußeren Wand ohne Verzicht auf ausreichende Festigkeit der Rohr-Boden-Verbindung reduziert werden.

Gemäß des erfindungsgemäßen Wärmetauschers wird eine innere Rohrwand durch ein extrudiertes Formteil gebildet. Wird die Dicke eines solchen Formteils entlang eines Umfangs variabel gewählt, ist ein zumindest doppelwandiges Rohr mit einer für die Festigkeit ausreichenden Wandstärke herstellbar, wobei an weniger empfindlichen Stellen Material eingespart werden kann, was bei einem Rohr mit konstanter Wandstärke nicht der Fall wäre. Eine extrudierte Hülse kann zur Bildung eines zumindest doppelwandigen Bereiches ebenso wie eine aus einem Blechstreifen geformte Hülse ohne großen Aufwand in ein vorhandenes zumindest einwandiges Rohr eingeschoben oder auf ein zumindest einwandiges Rohr aufgesteckt werden.

Gemäß einer bevorzugten Ausführungsform eines erfindungsgemäßen Wärmetauschers ist die äußere Wand des doppelwandigen Rohrs als Flachrohr und/oder als Mehrkantrohr ausgebildet. Besonders bei einem Mehrkantrohr kann beispielsweise die Form einer Einschub- oder Aufsteckhülse sehr einfach und dadurch kostengünstig durch entsprechendes Falten eines Blechstreifens an die Wandform des Rohres angepaßt werden.

Erfindungsgemäß ist der zumindest eine Verbindungssteg mit der inneren Wand einstückig ausgebildet.

Die Erfindung wird nachfolgend anhand von Ausführungsbeispielen unter Bezugnahme auf die Zeichnungen näher erläutert. Es zeigen:
- Fig. 1:: Einen Querschnitt eines Rohres eines Wärmetauschers,
- Fig. 2:: eine perspektivische Ansicht einer inneren Wand eines Rohres,
- Fig. 3:: eine perspektivische Ansicht einer inneren Wand eines Rohres eines Wärmetauschers,
- Fig. 4:: eine perspektivische Teilansicht eines aufgebrochenen Wärmetauschers, und
- Fig. 5:: einen ausschnittsweisen Längsschnitt eines Wärmetauschers.

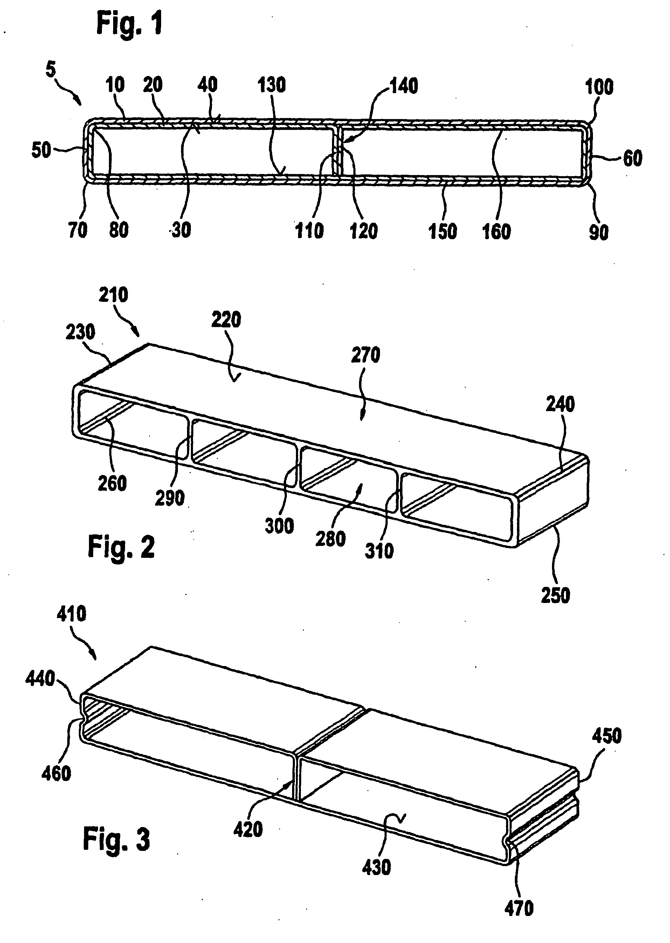

Die Figuren 1 und 3 gehören nicht zur Erfindung

In Fig. 1 ist ein Beispiel eines zumindest doppelwandigen Rohres in Querschnittsansicht dargestellt. Das Vierkantrohr 5 besteht aus einer äußeren Wand 10 und einer inneren Wand 20, wobei die Innenfläche 30 der äußeren Wand 10 mit der Außenfläche 40 der inneren Wand 20 verlötet ist.

Da bei einem Mehrkantflachrohr wie dem Vierkantrohr 5 in einem Wärmetauscher wie insbesondere einem Ladeluftkühler die größten mechanischen Belastungen im Bereich der Schmalseiten 50 und 60, besonders im Bereich der Kanten 70, 80, 90 und 100 auftreten, ist dort ein Lötkontakt zwischen der Innenfläche 30 der äußeren Wand 10 und der Außenfläche 40 der inneren Wand 20 besonders vorteilhaft. Die innere Wand 20 ist aus diesem Grund aus einem lotplattierten Blechstreifen zu einer Hülse gefaltet, die vor einem Lötvorgang in die äußere Wand 10 eingesteckt werden kann, so daß die Innenfläche 30 der äußeren Wand 10 die Außenfläche 40 der inneren Wand 20 im wesentlichen entlang des gesamten Rohrumfangs berührt.

Die Endbereiche 110 und 120 des Blechstreifens sind derart umgeformt, daß sie miteinander und mit einem gegenüberliegenden Bereich der Innenfläche 130 der inneren Wand 20 verlötbar sind, wodurch sie gemeinsam einen Steg 140 bilden, der die gegenüberliegenden Breitseiten 150 und 160 der inneren Wand 20 miteinander verbindet. Das Vierkantrohr 5 wird damit in dem doppelwandig ausgebildeten Bereich zusätzlich stabilisiert.

Fig. 2 zeigt eine als extrudierte Hülse ausgebildete innere Wand 210, die in ein nicht abgebildetes einwandiges Rohr einschiebbar ist, um einen doppelwandigen Bereich in einem Rohr in einem erfindungsgemäßen Wärmetauscher zu bilden, in einer perspektivischen Ansicht. Die Außenfläche 220 der inneren Wand 210 ist in ihrer Form einer Innenfläche einer nicht näher gezeigten äußeren Wand angepaßt, wobei die Eckbereiche 230, 240, 250 und 260 der inneren Wand 210 verstärkt sind, da sie im Betrieb des Wärmetauschers besonderen mechanischen Belastungen ausgesetzt sind. In weniger belasteten Bereichen wie den Breitseiten 270 und 280 ist die innere Wand 210 dünner ausgebildet, wodurch eine Materialersparnis erzielt wird. Zugunsten einer Stabilitätserhöhung sind die Breitseiten 270 und 280 durch Stege 290, 300 und 310 miteinander verbunden.

In Fig. 3 ist ein weiteres Beispiel einer inneren Wand 410 eines zumindest doppelwandigen Rohres in einem Wärmetauscher in perspektivischer Darstellung gezeigt. Die innere Wand 410 ist wie die innere Wand 20 des Ausführungsbeispiels in Fig. 1 aus einem lotplattierten Blechstreifen zu einer Hülse gefaltet und weist einen stabilisierenden Steg 420 auf.

In den Schmalseiten 440 und 450 dieser Hülse befanden sich Sicken 460 und 470, die einerseits die innere Wand 410 versteifen und damit das nicht gezeigte zumindest doppelwandige Rohr zusätzlich stabilisieren und andererseits verhindern, daß die Hülse beim Einschieben in eine äußere Wand an Erhöhungen der Innenfläche der äußeren Wand wie beispielweise Schweißnähten hängenbleibt.

Ein besonderer Vorteil dieses Beispiels ergibt sich durch die Möglichkeit, die innere Wand 410 mit Hilfe eines nicht dargestellten Stempels zur Bildung eines zumindest doppelwandigen Bereiches in ein zumindest einwandiges Rohr zu stecken, wobei die Außenfläche des Stempels größtenteils die Form der Innenfläche 430 der inneren Wand 410 besitzt. Ist die Sicke in der Außenfläche des Stempels verlaufend, d.h. wird sie in ihrer Längsrichtung schmäler und/oder niedriger, werden bei diesem Arbeitsgang die Sicken 460 und 470 der inneren Wand 410 nach außen gedrückt, wodurch die Schmalseiten 440 und 450 verbreitert werden. Da sich die innere Wand dann in der äußeren Wand verklemmt und bis zu einem Lötvorgang an einem Herausfallen aus der äußeren Wand gehindert ist, wird eine Erhöhung der Fertigungssicherheit erreicht.

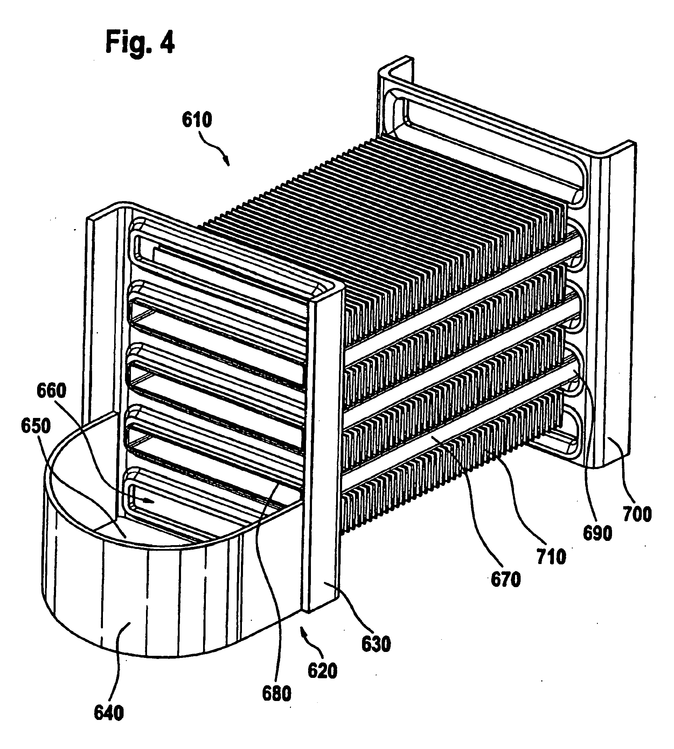

In Fig. 4 ist ein bevorzugtes Ausführungsbeispiel eines erfindungsgemäßen Wärmetauschers in perspektivischer, aufgebrochener Teilansicht dargestellt. Der Wärmetauscher 610 weist einen Kasten 620 auf, der durch einen Rohrboden 630 und einen Gehäusedeckel 640 gebildet wird, wobei sich im Inneren des Kastens 620 eine Kammer 650 zur Verteilung eines ersten, zu kühlenden Mediums, beispielsweise Luft, befindet. Durch Öffnungen 660 des Rohrbodens 630 sind Rohre 670 gesteckt, die an ihren Enden 680 doppelwandig ausgebildet sind. Mit ihren den Rohrenden 680 gegenüberliegenden Enden 690 münden die Rohre 670 in einen durch einen Rohrboden 700 angedeuteten Kasten zur Sammlung des zu kühlenden Mediums. Das kühlende Medium, beispielsweise ebenfalls Luft, strömt durch die Rohrzwischenräume, wo zu einer Erhöhung des Wärmeübertrags Wellrippen 710 angeordnet sind.

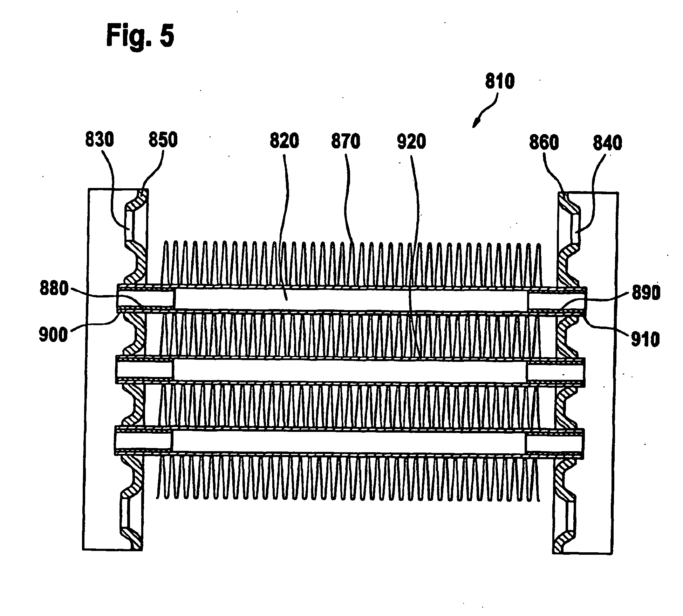

Fig. 5 zeigt eine weitere Ausführungsform eines erfindungsgemäßen Wärmetauschers in einem Längsschnitt. Wie bei dem in Fig. 4 dargestellten Beispiel stecken bei dem Wärmetauscher 810 Rohre 820 in Öffnungen 830 und 840 von Rohrböden 850 und 860, wobei zwischen den Rohren 820 wiederum Wellrippen 870 zu einer verbesserten Wärmeübertragung angebracht sind. Im Bereich der Rohrbodenöffnungen 830 und 840 sind Hülsen 880 und 890 als innere Wände in die Rohrenden 900 und 910 eingesteckt, wodurch die Rohre 820 im Bereich der Verlötung mit den Rohrböden 850 und 860 doppelwandig ausgebildet sind. Diese bezüglich einer Dichtigkeit und/oder Festigkeit empfindlichen Rohrbereiche werden dadurch bei geringem Materialmehraufwand verstärkt, da große Teile 920 der Rohre 820 einwandig bleiben.

Die vorliegende Erfindung wurde am Beispiel eines Ladeluftkühlers für ein Kraftfahrzeug beschrieben. Es wird jedoch darauf hingewiesen, daß der erfindungsgemäße Wärmetauscher auch für andere Zwecke geeignet ist.

## Patentansprüche

1. Wärmetauscher, insbesondere Ladeluftkühler für ein Kraftfahrzeug, mit zumindest einem Kasten mit zumindest einer Kammer zur Verteilung und/oder Sammlung eines strömenden Mediums und zumindest einem Rohrbündel, welches aus Rohren besteht, die mit der zumindest einen Kammer kommunizierend verbunden sind, wobei der zumindest eine Kasten einen Rohrboden mit Öffnungen, in die die Rohre des Rohrbündels eingesteckt sind, aufweist, wobei zumindest ein Rohr zumindest in einem Bereich, der in einer Öffnung des Rohrbodens steckt, zumindest doppelwandig ausgebildet ist, wobei eine innere Wand des zumindest einen Rohres an eine äußere Wand angepasst ist und flächig an der äußeren Wand des zumindest einen Rohres anliegt und
die innere Wand mit der äußeren Wand verlötet oder verschweißt ist, wobei das zumindest eine Rohr zumindest einen Verbindungssteg aufweist, der gegenüberliegende Bereiche einer inneren Wand miteinander verbindet, wobei der zumindest eine Verbindungssteg mit der inneren Wand einstückig ausgebildet ist, **dadurch gekennzeichnet, dass** die Eckbereiche der inneren Wand verstärkt sind und Bereiche von Breitseiten der inneren Wand dünner ausgebildet sind, wobei die innere Wand des zumindest einen Rohres als extrudiertes Hülse ausgebildet ist.

2. Wärmetauscher nach Anspruch 1, **dadurch gekennzeichnet, daß** die äußere Wand des zumindest einen Rohrs als Flachrohr und/oder Mehrkantrohr ausgebildet ist.

## Claims

1. A heat exchanger, in particular a charge air cooler for a motor vehicle, having at least one box with at least one chamber for distributing and/or collecting a flowing medium and with at least one tube bundle consisting of tubes which are connected in a communicating manner to the at least one chamber, the at least one box having a tube plate with orifices into which the tubes of the tube bundle are inserted, at least one tube having an at least double-walled construction at least in an area that is inserted in an orifice of the tube plate, an inner wall of the at least one tube being adapted to an outer wall and being in planar contact with the outer wall of the at least one tube, and the inner wall being soldered or welded to the outer wall, the at least one tube having at least one connecting web which connects mutually opposite regions of an inner wall to one another, the at least one connecting web being constructed in one piece with the inner wall, **characterized in that** the corner areas of the inner wall are reinforced and areas of the wider sides of the inner wall are made thinner, the inner wall of the at least one tube being designed as an extruded sleeve.

2. The heat exchanger as claimed in claim 1, **characterized in that** the outer wall of the at least one tube is designed as a flat tube and/or polygonal tube.

## Revendications

1. Echangeur de chaleur, en particulier refroidisseur d'air de suralimentation pour un véhicule automobile, comprenant au moins une boîte comportant au moins une chambre servant à répartir et/ou à collecter un milieu en circulation, et comportant au moins un faisceau de tubes qui se compose de tubes qui sont reliés en communiquant avec la chambre au moins au nombre de un, où la boîte au moins au nombre de un présente un plateau à tubes comportant des ouvertures dans lesquelles sont enfoncés les tubes du faisceau de tubes, où au moins un tube, au moins dans une zone qui pénètre dans une ouverture du plateau à tubes, est configuré en étant au moins à double paroi, où une paroi intérieure du tube au moins au nombre de un est adaptée à une paroi extérieure et s'applique à plat sur la paroi extérieure du tube au moins au nombre de un, et la paroi intérieure est brasée ou soudée avec la paroi extérieure, où le tube au moins au nombre de un présente au moins une nervure de liaison qui relie entre elles des zones opposées d'une paroi intérieure, où la nervure de liaison au moins au nombre de un est configurée en formant une seule et même pièce avec la paroi intérieure, **caractérisé en ce que** les zones angulaires de la paroi intérieure sont renforcées, et des zones de grands côtés de la paroi intérieure sont configurées en étant plus minces, où la paroi intérieure du tube au moins au nombre de un est configurée comme un manchon extrudé.

2. Echangeur de chaleur selon la revendication 1, **caractérisé en ce que** la paroi extérieure du tube au moins au nombre de un est configurée comme un tube plat et/ou comme un tube polygonal.
